Europäisches Patentamt

European Patent Office

Office européen des brevets

(19)

(11) Publication number: **0 263 082 B1**

(12) **EUROPEAN PATENT SPECIFICATION**

(45) Date of publication of patent specification: **03.02.93**    (51) Int. Cl.5: **B60J 7/10**

(21) Application number: **87830343.7**

(22) Date of filing: **29.09.87**

(54) **Device for adjusting the height of the transverse support ribs for the tarpaulin of a load-carrying motor vehicle.**

(30) Priority: **01.10.86 IT 5390186 U**

(43) Date of publication of application:
**06.04.88 Bulletin 88/14**

(45) Publication of the grant of the patent:
**03.02.93 Bulletin 93/05**

(84) Designated Contracting States:
**AT BE DE FR GB IT LU NL SE**

(56) References cited:
**EP-A- 0 026 805
CH-A- 171 552
DE-A- 3 138 338
FR-A- 1 388 462
FR-A- 2 393 692**

(73) Proprietor: **VIBERTI VEICOLI INDUSTRIALI S.r.l.**
**Viale G. Matteotti 99**
**I-10042 Nichelino (Torino)(IT)**

(72) Inventor: **Nobili, Roberto**
**c/o OFFICINE VIBERTI S.p.A. Viale Matteotti 99**
**I-10042 Nichelino Torino(IT)**

(74) Representative: **Saconney, Piero et al**
**c/o JACOBACCI-CASETTA & PERANI S.p.A.**
**Via Alfieri, 17**
**I-10121 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

EP 0 263 082 B1

## Description

The present invention relates to load carrying motor vehicles and, in particular, but not exclusively, to semitrailers whose body is covered by a tarpaulin.

The object of the invention is to provide a device for adjusting the height of the transverse support ribs for the tarpaulin of a load-carrying vehicle body, according to the preamble of Claim 1.

All vehicles gradually become lower as the transported load increases, due to the suspension yielding. Road vehicles which comprise a body covered by a tarpaulin whose height is fixed in relation to the floor are designed such that the height from ground level of the top of the tarpaulin during travel in the unloaded state is a maximum of 4 metres, as permitted by the traffic regulations. In this case the height of the top of the cover when the vehicle is loaded is less than the permitted limit, which means that the load possibilities offered by the traffic regulations are not fully exploited. This problem is particularly evident in the case of semitrailers.

The problem is usually solved by an arrangement of the kind shown e.g. in Figures 4 and 5 of FR-A-1 388 462. In this arrangement the transverse ribs which support the tarpaulin comprise legs which are mounted telescopically with respect to the uprights. The ribs are kept in the lowered position for travel in the unloaded state and the raised position for a full load by means of bolts which may be inserted in appropriate holes in the uprights and the legs. In order to change over from one rib height to the other, the bolts have to be manually removed, the ribs raised or lowered in turn and then the bolts reinserted. This is an extremely laborious operation requiring two people. In order to raise the rib, one of the two people has firstly to bear its weight while the other removes the bolts and then lift it so that the other person can replace the bolts. In order to lower the rib, one person has to bear its weight to enable the other to remove the bolts and then support it as it descends. The person who supports the rib usually has to stand on a stool or similar object, which he has to move from one upright to the other. The person who inserts and removes the bolts also works in an awkward position, since he has to stretch his arm upwards while he is standing on the floor.

In view of the inconvenience of the operation, there are very few drivers who, before setting off on a journey without a load, make sure that they lower the tarpaulin with respect to the floor in compliance with the traffic regulations.

An arrangement by which it has been attempted to solve the problem is known through FR-A-2 393 692, account of which is taken in the preamble of Claim 1.

In this known device the raising means are constituted by a portable tool which can be fitted each time to an upright and its corresponding leg. In this known portable tool the manually operated lever is pivoted at one end to a block or foot which may be slid in a channel along the upright and abutted from below to the lower end of the leg. The tool includes a connecting rod which is articulated at one end to an intermediate point on the lever. The other end of the connecting rod may be hooked to a bracket on the upright. When the lever is lowered against the upright with the handle down, the leg is raised by the sliding foot.

When the leg has been raised by means of the lever, and before the tool is removed from the upright, a bolt is inserted in appropriate holes in the upright and the leg to keep the leg in the raised position.

The solution of FR-A-2 393 692 has the advantage, over that of FR-A-1 388 462, of requiring only one person instead of two to raise and lower the ribs by means of the handle and to insert or remove the bolts. However, it has the drawback of requiring the use of loose parts, the bolts and the portable tool, which are liable to be lost or misplaced with the consequence of rendering the arrangement inoperative.

Another arrangement by which it has been attempted to solve the problem is known through DE-A-3 138 338. In this arrangement the transverse ribs which support the tarpaulin comprise legs which are mounted telescopically with respect to the uprights. According to one embodiment each upright has raising means which consist of a rack-and-pinion gear located within the upright. The rack is formed as a part of the rib leg and the pinion is rotatably mounted in a fixed section of the upright. Each pinion can be manually rotated with the aid of a removable crank to raise and lower the ribs. Such embodiment could have some advantage with respect to the arrangements disclosed by FR-A-1 388 462 and FR-A-2 393 692, since the raising of the ribs can be achieved by lesser human effort thanks to the mechanical advantage afforded by the rack-and-pinion mechanisms. However, in the rack-and-pinion embodiment the pinion has necessarily a small diameter to be contained within the upright. Thus, the raising and lowering of the ribs constitutes a time-consuming operation due to the fact that several turns of the crank are required to change over from one rib height to the other.

Under another aspect, a rack-and-pinion mechanism is by its nature reversible and thus some additional locking means must be provided to lock each rib leg at least in the raised position. The document DE-A-3 138 338 does not disclose any specific locking means and it is to be supposed that such means would take the form of bolts similar to those of FR-A-1 388 462 or FR-A-2 393 692, with the drawbacks already mentioned in connection with these documents.

A further drawback, similar to that of FR-A-2 393 692, of the rack-and-pinion embodiment of DE-A-3 138 338 is that a removable crank is liable to be lost or misplaced with the consequence of rendering the arrangement inoperative just as the tool of FR-A-2 393 692.

According to other embodiments disclosed by DE-A-3 138 338 each upright has raising means in the form of a hydraulic or pneumatic cylinder. This allows to raise and lower all the ribs at the same time with no manual effort. As one may understand, such embodiments are much more complicated than purely mechanical devices and thus are much more expensive, are subject to leaks or other malfunctions and require expensive maintenance by specialized personnel. Further, in the case of a trailer or a semitrailer, the latter require an appropriate fluid pressure source of their own. A fluid pressure source aboard the lorry or tractor would be unsuitable, because the cylinders could not be operated when the trailer or semitrailer is uncoupled from the lorry or tractor.

DE-A-3 138 338 also suggests the use of electric motors instead of fluid cylinders. Also this embodiment is expensive because each upright must be provided with a motor. In this case too a trailer or semitrailer must be provided with a power source, e.g. in the form of batteries, to allow the operation of the raising means when the trailer or semitrailer is uncoupled from the lorry or tractor.

The object of the invention is to provide a simple and cheap manual device which can be permanently affixed to the lateral uprights and the legs of the ribs, which does not include components liable to be lost or misplaced, and which enables a single person to adjust the height of the ribs by a convenient and quick operation, thus encouraging drivers to respect the traffic regulations.

This object is solved according to the invention by the features specified in the characterizing part of claim 1.

As will become clearer from the description referring to the drawings, with a device as claimed the raising and lowering of the ribs simply requires, for each operation, one person operating a lever disposed in a relatively low and therefore convenient position. The device has means for locking the lever in both of the raised and lowered positions and thus does not need the use of separate parts, such as locking bolts, liable to be lost or misplaced.

In the drawings, which are provided by way of non-limiting example,

Figure 1 is a perspective view of a device according to the invention, associated with one of the uprights and with the relevant support rib for a tarpaulin,

Figure 2 is a front view, partially in section, of the device according to Figure 1, shown on an enlarged scale and with the lever lowered,

Figure 3 is a section along the vertical line III-III of Figure 2,

Figure 4 is a section on an enlarged scale along the horizontal line IV-IV of Figure 2,

Figure 5 is an illustration similar to that of Figure 3, with the device being operated, and

Figure 6 is an illustration similar to that of Figure 2, with the lever raised.

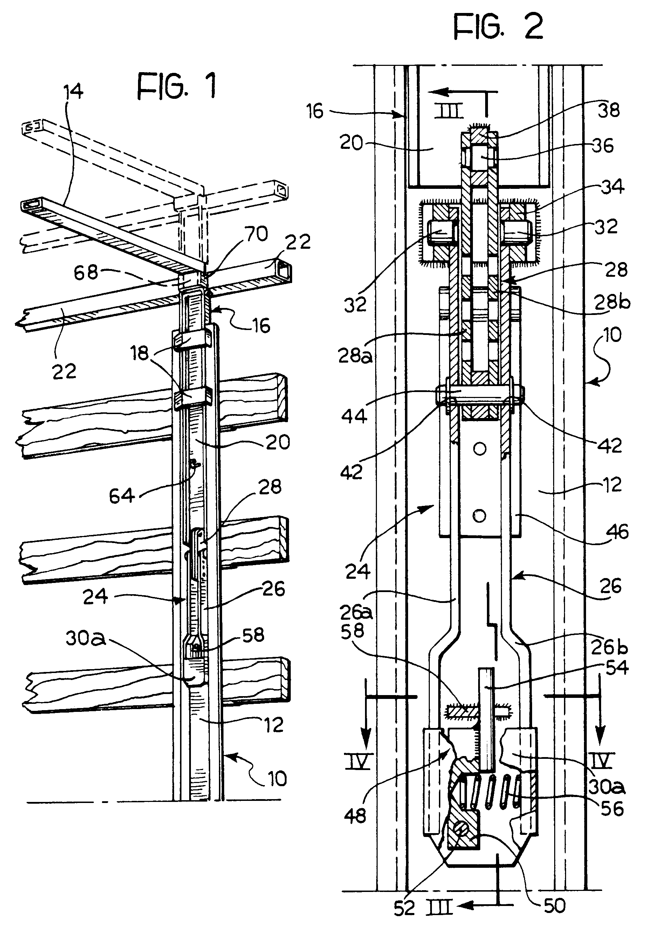

Referring to Figure 1, reference numeral 10 designates one of the lateral uprights of one of the various pairs of uprights which rise from the tail-boards of a body of a semitrailer or other road vehicle. The upright 10 is formed by a sheet metal section which is provided with a channel 12 facing the inside of the load-carrying space.

The upright 10 and its counterpart, which is disposed on the other side of the body, bear a transverse support rib 14 for the tarpaulin (not shown) covering the body. The rib 14 comprises a vertical leg 16 at each end. This leg 16 is mounted so as to slide telescopically in the channel 12, in which it is held by bridges 18 welded to the wings of the upright 10.

The leg 16 is formed by a strong C-shaped sheet metal section defining a channel 20 which also faces the inside of the load-carrying space.

The tarpaulin is supported at the sides by longitudinal members 22 extending between the ribs.

Because of the possibility of sliding the legs 16 inside the uprights 10, the assembly consisting of the ribs 14, their legs 16 and the longitudinal members 22 can occupy a lowered position, shown by full lines in Figure 1, and a raised position, shown by broken lines in the same Figure.

The device described up to now does not differ from the more conventional ones. In the conventional arrangements the components 14, 16 and 22 are held in both positions by means of bolts which are inserted in corresponding holes in the uprights and the legs of the ribs.

According to the invention the components 14, 16 and 22 are moved from one position to the other and held in these positions by a device generally indicated by the reference numeral 24. A device such as 24 is associated with each upright 10, with the exception, in the case of a semitrailer, of the uprights disposed at the rear end of the body, for reasons which will be explained below.

3

Reference will now be made to Figures 2 and 6 for a detailed description of the device 24.

The device 24 essentially comprises raising means consisting of a toggle formed by a manually operated lever 26 and a connecting rod 28, also shown in Figure 1.

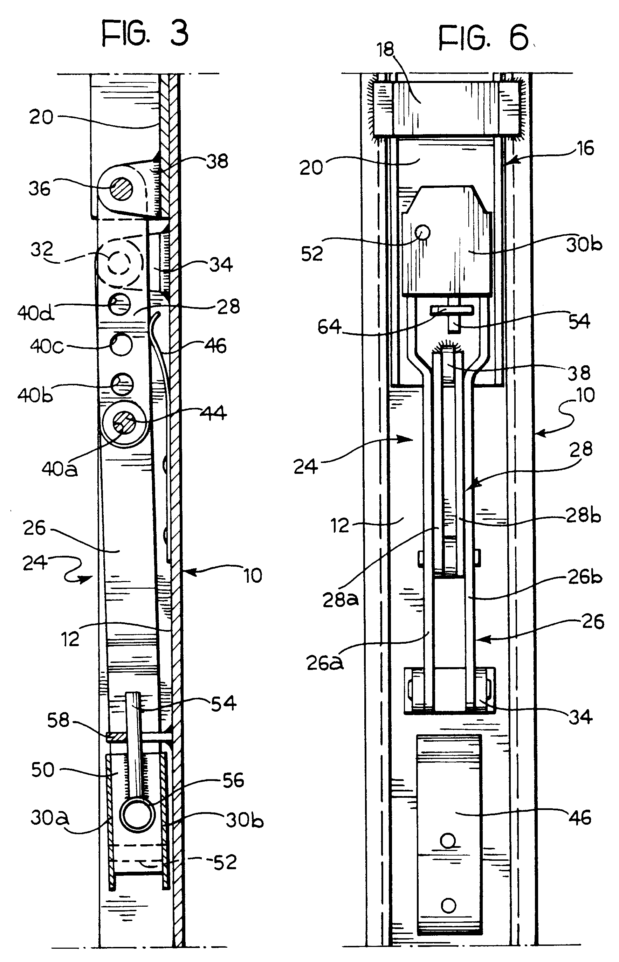

The lever 26 comprises two arms 26a, 26b, which are spaced at a parallel distance from one another and are formed by profiled strips, which are a mirror-image of one another, of strong sheet metal. At one end (the lower end in Figures 2 and 3) the two arms 26a, 26b are connected together by welded plates 30a, 30b so as to form a handle which constitutes a housing for a spring locking system, which is described below.

At its other end (the upper end in Figures 2, 3 and 5), the lever 28 is pivoted by means of a pin 32 to a fork 34 which is welded, in the channel 12, to the upright 10.

The connecting rod 28 is also formed by two adjacent strong sheet metal strips 28a, 28b, which are framed by the arms 26a, 26b of the lever 26.

At one end (the upper end in Figures 3, 4 and 5) the connecting rod 28 is articulated by a pin 36 to a lug 38 which is welded to the leg 16 in the channel 20.

The two strips 28a, 28b which form the connecting rod 28 comprise, along the length of the latter, a plurality of holes 40a, b, c, d for a purpose which will be explained below.

The arms 26a, 26b of the lever 26 comprise aligned holes 42 at an intermediate point on the latter.

A removable trunnion 44, which is inserted in the holes 42 and in the end holes 40a of the connecting rod 28, is illustrated in Figures 2, 3 and 5.

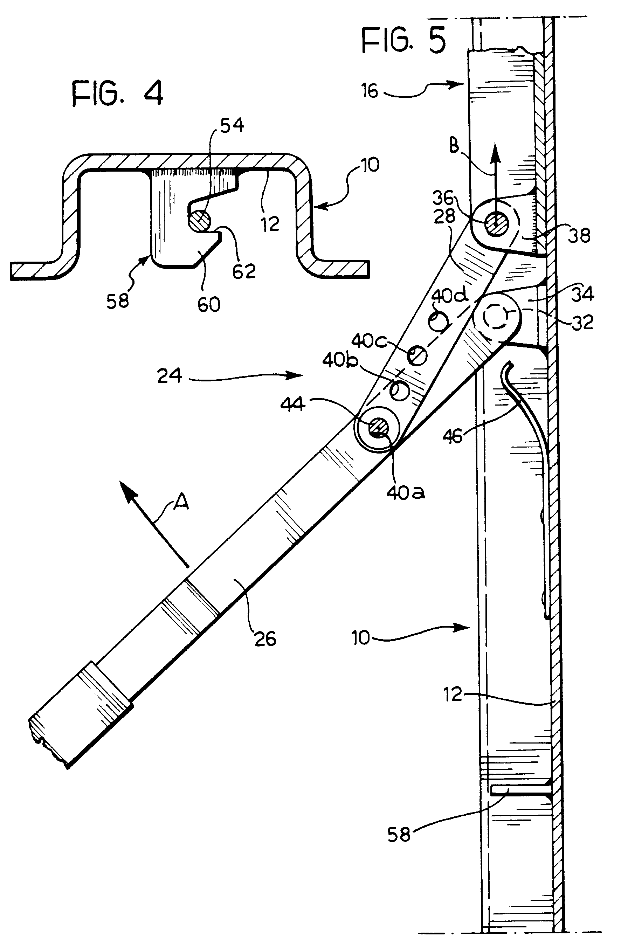

In Figures 2 and 3, as in Figure 1, the lever 26 is applied to the upright 10, inside the channel 12, and the components 14, 16 and 22 are lowered, as shown by full lines. In order to raise them into the position shown by broken lines in Figure 1, the lever is rotated upwards, as indicated by the arrow A in Figure 5. As will be obvious, this rotation in the direction of the arrow A corresponds to the upward translation of the leg in the direction of the arrow B in Figure 5.

At the end of the upward rotation the lever, as illustrated in Figure 6, is applied to the upright 10, with the interposition of the leg 16, which is completely raised and disposed in the channel 20 of the latter.

The operation for lowering the components 14, 16 and 22 is the reverse of that described above.

In order to ensure that the toggle formed by the lever 26 and the connecting rod 28 always bends when moving away from the upright 10, a spring blade 46 is secured to the bottom of the channel 12. When the lever 26 is lowered, as in Figures 2 and 3, it is applied against the spring blade 46, which tends to push it back so as to ensure that this bending takes place and causes the handle of the lever 26 to emerge from the channel 12 by the amount needed to grip it.

The device 24 is provided with means for locking the lever 26 in either the lowered or raised position. These means will now be described with particular reference to Figures 2 and 4.

A latch generally indicated by 48 is mounted inside the housing defined by the plates 30a and 30b of the handle. The latch 48 comprises a block 50 which is pivotally mounted on a pin 52 supported by the two plates 30a and 30b. A rod 54, which forms the actual latch, is welded to the block 50. The rod 54 extends between the arms 26a and 26b of the lever 26, in the direction of pivoting of the latter.

A return spring 56 is disposed in the space between the plates 30a, 30b and acts against the arm 26b at one end and the block 50 at the other, tending to recall the rod 54 towards the left in Figure 2.

A lower hook 58, which is shown in Figures 1 to 5 and whose profile is clearly illustrated in Figure 4, is welded to the bottom of the channel 12 of the upright 10. The hook 58 comprises a bevelled lip 60 which defines a hooking notch 62 which is open to the side (to the right in Figures 2 and 4).

The lever 26 is locked in the lowered position in Figure 2 when, as in Figures 2 and 4, the latch or rod 54 is engaged in the notch 62. In order to release the lever 26 for the purpose of raising the components 14, 16, 22, it is sufficient simply to insert a finger between the arms 26a, 26b above the hook 58 and move the latch to the right (in Figures 2 and 4) against the bias of the spring 56 until it is removed from the notch 62.

In order to re-lock the lever 26 in the lowered position it is sufficient to push it towards the bottom of the channel 12; when the rod 54 engages the ramp of the bevelled lip 60, it is subject to a cam effect which moves it to the right (in Figures 2 and 4) against the bias of the spring 56. While continuing to push the lever 26, the latch 54 snaps into the notch 62 under the bias of the spring 56.

In order to lock the lever 26 in the raised position, an upper hook 64, which is similar to the lower hook 58, is welded to the bottom of the channel 20 of the leg 16. This hook 64 can be seen in Figures 1 and 6. When the leg 16 is raised the hook 64 is at the same height as the rod 54, and its spring hooking action to lock the lever 26 in the raised position, as well as its release by means of a finger, take place in the manner described for the lower hook 58. The engagement of the latch 54 in the hook 64 is made possible, inter alia, by the symmetrical arrangement of the latch 54 with respect to the plates 30a and 30b.

EP 0 263 082 B1

The function of the holes 40a, b, c and d will now be explained.

The device illustrated in the figures is particularly designed for a semitrailer. It has been found that the front part of semitrailers, which is supported on the fifth wheel of the tractor, is subject to the maximum height difference between the unloaded and fully loaded state. However the height difference of the rear end is virtually nil. In this situation it is appropriate to permanently fix the rib of the rear end to its uprights at a height which corresponds to the 4 metres specified by the traffic regulations. It should however be possible to raise the rib corresponding to the front end of the semitrailer by a distance corresponding to the above-mentioned maximum difference in height.

To give a practical example, a case will be considered in which the semitrailer is provided with five equidistant ribs and respective pairs of uprights. With I indicating the front end rib, II, III and IV the successive intermediate ribs and V the rear rib, the differences in height will be, for example, those indicated in the following table.

| RIB | DIFFERENCE IN HEIGHT |
|---|---|
| I | 132 mm |
| II | 99 mm |
| III | 66 mm |
| IV | 33 mm |
| V | 0 mm |

The device illustrated in the figures is dimensioned such that, when the trunnion 44 is inserted in the hole 40a, the difference is 132 mm for the rib I; the articulation in the hole 40b corresponds to the difference of 99 mm for the rib II; the articulation in the hole 40c corresponds to the difference of 66 mm for the rib III; the articulation in the hole 40d corresponds to the difference of 33 mm for the rib IV.

Since, as mentioned above, the devices 24 associated with the different uprights are operated one after the other, it is advisable for the longitudinal members 22 to have a certain play, so that they can bend when one leg 16 is raised and the adjacent one is lowered. In practice, when there are five ribs, it is sufficient for the longitudinal members 22 to be connected in a non-rigid manner to the legs, such as 16, of the ribs I, III and V.

Furthermore, since the same rib, such as 14, may have one leg, such as 16, lowered and the other raised, a rib 14 and its legs 16 are preferably connected together with a certain play. Figure 1 therefore shows how the rib 14 is provided at its ends with a prismatic pin 68 which is inserted with play in a prismatic bearing 70 which is rigid with the leg 16.

## Claims

1. Device for adjusting the height of the transverse support ribs (14) for the tarpaulin of a load-carrying vehicle body, of the type in which each transverse rib (14) is supported by a pair of lateral uprights (10) and comprises, at each end, a leg (16) which can slide telescopically with respect to the upright (10), and in which the upright (10) have raising means associated thereto, which essentially comprise a toggle including a manually operated lever (26), which is pivoted at one end to the upright (10) and the other end of which acts as a handle for placing the leg (16) in either a lowered or a raised position, which correspond respectively to the unloaded and fully loaded state of the body, characterised in that the lever (26) is permanently pivoted at said one end to the upright, and the toggle includes a connecting rod (28) which is pivoted at one end to an intermediate point on the lever (26) and, at the other end, is permanently pivoted to the leg (16) of the rib (14), the arrangement being such that, when the lever (26) is lowered against the upright (10) with the handle (30a, 30b) down, the leg (16) is lowered, and when the lever (26) is raised against the upright (10) with the handle (30a, 30b) high, the leg (16) is raised, and in that snap-locking means are provided for locking the lever (26) in both positions, which means comprise on the one hand a latch which is incorporated in the handle (30a, 30b) of the lever (26), is accessible at the sides of the lever (26) which, in both the lowered and raised positions, alternatively face the upright (10), and can be moved laterally against the bias of a return

5

spring (56), which is also incorporated in the handle (30a, 30b), and on the other hand a lower hook (58) which is rigid with the upright (10), is open to the side and in which the latch (54) can snap-lock with the lever (26) lowered, and a similar upper hook (64) which is rigid with the leg (16) or the upright and in which the latch (54) can snap-lock with the lever (26) raised, the latch being releasable from the hooks (58, 64) by being manually moved against the bias of the spring (56).

2. Device as claimed in Claim 1, characterized in that the lever (26) is formed by two arms (26a, 26b), which are spaced at a parallel distance from one another and between which the connecting rod (28) is disposed.

3. Device as claimed in Claim 1 or 2, characterized in that the connecting rod (28) has a plurality of holes (40a, 40b, 40c, 40d) along its length which may receive a trunnion (44) articulated to the lever (26), for the purpose of adjusting the raised position of the leg (16).

4. Device as claimed in any one of the preceding claims, characterized in that the upright (10) is provided with a return spring (46) against which the lever (26) is applied in the lowered position and which tends to move it away from the upright (10).

**Patentansprüche**

1. Einrichtung zur Einstellung der Höhe von Querstützrippen (14) für die Plane einer lasttragenden Fahrzeugkarosserie, und zwar von der Art, bei der jede Querrippe (14) durch ein Paar von Seitenpfosten (10) gestützt wird und an jedem Ende einen Schenkel (16) umfaßt, der teleskopartig hinsichtlich des Pfostens (10) gleiten kann, und bei der der Pfosten (10) mit Hebemitteln versehen ist, die im wesentlichen ein Kniehebelgelenk mit einem händisch bedienten Hebel (26) umfassen, wobei der Hebel (26) an einem Ende am Pfostens (10) schwenkbar gehalten ist und das andere Ende als Griff dient, um den Schenkel (16) in eine gehobene oder abgesenkte Stellung zu bringen, die jeweils dem vollbeladenen oder unbeladenen Zustand der Karosserie entspricht, dadurch gekennzeichnet, daß der Hebel (26) an einem Ende permanent am Pfosten schwenkbar gehalten ist und daß das Kniehebelgelenk einen Verbindungsstab (28) umfaßt, der an seinem einen Ende an einem Mittelpunkt des Hebels (26) angebracht ist und an seinem anderen Ende am Schenkel (16) der Rippe (14) permanent schwenkbar gehalten ist, wobei die Anordnung derart ist, daß, wenn der Hebel (26) mit dem Griff nach unten (30a, 30b) gegen den Pfosten (10) abgesenkt wird, der Schenkel (16) gesenkt wird, und daß, wenn der Hebel (26) mit dem Griff (30a,30b) nach oben gegen den Pfosten (10) gehoben wird, der Schenkel (16) gehoben wird, und daß Schnappverschlußmittel vorgesehen sind, um den Hebel (26) in beiden Stellungen zu versperren, wobei die Mittel einerseits eine Verriegelung umfassen, die im Griff (30a, 30b) des Hebels (26) eingebaut und von den Seiten des Hebels (26) sowohl in der gehobenen als auch abgesenkten Stellung zugänglich ist, wobei die Seiten des Hebels abwechselnd auf den Pfosten (10) Zeigen, und seitlich gegen den Widerstand einer Rückstellfeder (56), die ebenfalls im Griff (30a, 30b) eingebaut ist, bewegt werden kann, und andererseits einen unteren Haken (58) umfassen, der mit dem Pfosten (10) fest verbunden ist, an der Seite geöffnet ist und in den die Verriegelung (54) einschnappen kann, wenn der Hebel (26) gesenkt wird, sowie einen ähnlichen oberen Haken (64), der mit dem Schenkel (16) oder dem Pfosten fest verbunden ist und in den die Verriegelung (54) bei gehobenen Hebel (26) einschnappen kann, wobei die Verriegelung von den Haken (58, 64) lösbar ist, indem sie händisch gegen den Widerstand der Rückstellfeder (56) bewegt wird.

2. Einrichtung nach Anspruch 1, dadurch gekennzeichnet, daß der Hebel (26) von zwei Armen (26a, 26b) gebildet wird, die parallel voneinander beabstandet sind und zwischen welchen der Verbindungsstab (28) vorgesehen ist.

3. Einrichtung nach Anspruch 1 oder 2, dadurch gekennzeichnet, daß der Verbindungsstab (28) eine Vielzahl von Löchern (40a, 40b, 40c, 40d) entlang seiner Länge umfaßt, die einen Drehzapfen (44), der gelenkig mit dem Hebel (26) verbunden ist, aufnehmen können, um die erhobene Stellung des Schenkels (16) einzustellen.

4. Einrichtung nach einem der vorstehenden Ansprüche, dadurch gekennzeichnet, daß der Pfosten (10) mit einer Rückstellfeder (46) versehen ist, gegen die der Hebel (26) in der gesenkten Position zu liegen kommt und die die Tendenz hat, ihn vom Pfosten (10) wegzudrücken.

**Revendications**

1. Dispositif pour ajuster la hauteur des arceaux transversaux (14) de la bâche d'une carrosserie d'un véhicule porteur de charge, du type dans lequel chaque arceau (14) est supporté par une paire de montants latéraux (10), et comprend, à chaque extrémité, une jambe (16) qui peut coulisser télescopiquement par rapport au montant (10) et dans lequel chaque montant (10) comporte des moyens de montée qui lui sont associés, qui comprennent essentiellement une genouillère comportant un levier manoeuvré manuellement (26), qui peut pivoter à une extrémité du montant (10) et dont l'autre extrémité agit en tant que poignée pour placer la jambe (16), soit dans une position abaissée, soit dans une position montée, qui correspond respectivement à l'état déchargé et à l'état totalement chargé de la carrosserie, caractérisé en ce que le levier (26) est monté pivotant de manière permanente à ladite extrémité sur le montant et que la genouillère comporte une biellette (28) qui peut pivoter à une extrémité sur un point intermédiaire du levier (26) et, à l'autre extrémité, est monté pivotant de manière permanente sur la jambe (16) de l'arceau (14), la disposition étant telle que, lorsque le levier (26) est abaissé contre le montant (10) avec la poignée (30a, 30b) en position basse, la jambe (16) est abaissée, et lorsque le levier (26) est monté contre le montant (10) avec la poignée en position haute (30a, 30b), la jambe (16) est montée, et en ce que des moyens d'encliquetage sont prévus pour verrouiller le levier (26) dans les deux positions, lesquels moyens comprennent d'une part un loquet qui est incorporé dans la poignée (30a, 30b) du levier (26) qui est accessible sur les côtés du levier (26) lesquels, dans les deux positions abaissée et montée, font face alternativement au montant (10), et qui peut être déplacé latéralement contre la sollicitation d'un ressort de rappel (56), lequel est également incorporé dans la poignée (30a, 30b) et, d'autre part, un crochet inférieur (58) qui est solidaire du montant (10), est ouvert sur le côté et dans lequel le loquet (54) peut s'encliqueter avec le levier (26) abaissé, et un crochet supérieur similaire (64) qui est solidaire de la jambe (16) ou du montant et dans lequel le loquet (54) peut s'encliqueter avec le levier (26) relevé, le loquet étant libérable des crochets (58, 64) en étant déplacé manuellement contre la sollicitation du ressort (56).

2. Dispositif selon la revendication 1, caractérisé en ce que le levier (26) est formé par deux bras (26a, 26b) qui sont écartés parallèlement à distance l'un de l'autre et entre lesquels la biellette (28) est disposée.

3. Dispositif selon la revendication 1 ou 2, caractérisé en ce que la biellette (28) comporte une multitude de trous (40a, 40b, 40c, 40d) suivant sa longueur qui peuvent recevoir un pivot (44) articulé sur le levier (26) dans le but de régler la position montée de la jambe (16).

4. Dispositif selon l'une quelconque des revendications précédentes, caractérisé en ce que le montant (10) comporte un ressort de rappel (46) contre lequel le levier (26) est appliqué dans la position abaissée et qui tend à l'éloigner du montant (10).

FIG. 1

FIG. 2

# FIG. 3

20
36
38
32
34
40d
28
40c
46
40b
44
40a
26
24
10
12
54
58
50
56
30a
30b
52

# FIG. 6

18
20
16
52
30b
64
54
38
10
24
12
28
28b
28a
26b
26a
26
34
46

FIG. 4

FIG. 5